# DEMANDE DE BREVET EUROPEEN

(11) **EP 1 632 412 A1**
(43) Date de publication de la demande: **08.03.2006**
(21) Numéro de dépôt: 05300596.3
(22) Date de dépôt: 18.07.2005
(51) Int. Cl.: B60S 1/04

(54) **Platine de support d'essuie-vitre de véhicule automobile et procédé de montage associé**

(30) Priorité: 02.09.2004 FR 0451957
(71) Demandeur: Renault s.a.s., 92100 Boulogne Billancourt (FR)
(72) Inventeur: Emeric, Elisabeth, 78000, VERSAILLES (FR); Madeleine, Pierre, 78180, MONTIGNY LE BRETONNEUX (FR)

(57) **Abrégé**

La platine de support d'essuie vitre de véhicule comporte une zone de fixation pour la fixation d'un mécanisme (48) de support et d'entraînement des balais d'essuie vitre et une zone d'assemblage (65) pour fixer la platine sur un élément structurel du véhicule. La zone d'assemblage est une zone périphérique (65) apte à obturer une ouverture prévue dans l'élément structurel du véhicule. Elle comporte au moins un trou de passage (62) pour le passage d'au moins un axe (60) de support et d'entraînement d'un balai d'essuie vitre.

## Description

La traverse inférieure de baie d'un véhicule automobile vise à assurer une tenue structurelle de la zone sous-baie, c'est-à-dire de la zone située sous l'extrémité avant du pare-brise. C'est également dans cette zone qu'est monté le mécanisme d'essuie-vitre, ainsi que les supports de bras d'essuie-vitre. Ces éléments prennent place, selon les architectures, dans la traverse inférieure de baie ou juste devant cette traverse.

L'invention a pour objet une platine de support d'essuie-vitre de véhicule automobile qui permet de constituer avec la traverse un corps creux fermé de manière à en améliorer les caractéristiques vibratoires.

Ces buts sont atteints, conformément à l'invention, par le fait que la platine de support comporte une zone de fixation pour la fixation d'un mécanisme de support et d'entraînement des balais d'essuie-vitre et une zone d'assemblage pour fixer la platine sur un élément structurel du véhicule.

Avantageusement, la zone d'assemblage est une zone périphérique apte à obturer une ouverture prévue dans l'élément structurel du véhicule. La platine comporte au moins un trou de passage pour le passage d'au moins un axe de support et d'entraînement d'un balai d'essuie-vitre. L'élément structurel est avantageusement une traverse creuse, en particulier la traverse inférieure de baie.

L'invention concerne par ailleurs un procédé de montage d'un mécanisme de support et d'entraînement des balais d'essuie-vitre sur un élément structurel. Selon ce procédé :
- on pré-assemble le mécanisme de support et d'entraînement sur une platine conforme à l'invention de manière à constituer un sous-ensemble ;
- on monte ce sous-ensemble sur un élément structurel du véhicule.

Grâce à ces étapes, la platine vient fermer l'ouverture de la traverse inférieure de baie qui est rendue nécessaire pour la mise en place du mécanisme d'essuie-vitre. Cette platine permet ainsi de rendre l'ensemble étanche et améliore les caractéristiques vibratoires et acoustiques de cet ensemble. De plus, l'ensemble fermé présente également une résistance accrue aux chocs.

D'autres caractéristiques et avantages de l'invention apparaîtront encore à la lecture de la description qui suit d'un exemple de réalisation donné à titre illustratif en référence aux figures annexées. Sur ces figures :
- la figure 1 est une vue en perspective de l'intérieur d'une platine de support conforme à l'invention ;
- la figure 2 est une vue en perspective de la partie extérieure de la platine de la figure 1 ;
- la figure 3 est une vue partielle en coupe de la platine montée sur une structure de support ;
- la figure 4 est une vue en perspective de dessous d'une partie avant d'un châssis de véhicule automobile comportant la platine de l'invention.

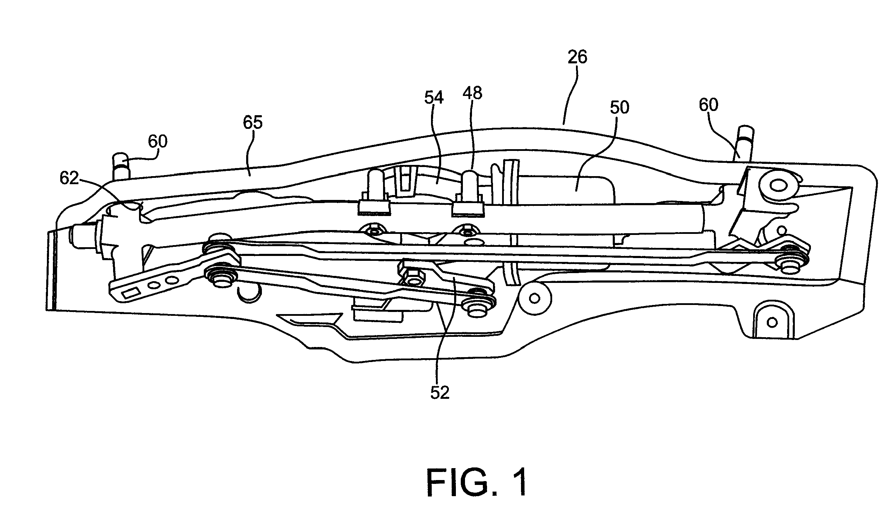

Sur la figure 1, on a représenté une vue en perspective d'une platine 26 à l'intérieur de laquelle est monté un mécanisme 48 de support et d'entraînement des balais d'essuie-vitre d'un véhicule automobile. Le mécanisme 48 est équipé d'un moteur électrique 50 qui entraîne une manivelle 52 par l'intermédiaire d'un réducteur 54. Par le jeu d'un mécanisme de type bielle et manivelle classique, la rotation de la manivelle 52 est transformée en une rotation angulaire alternative des axes de support 60 des balais d'essuie-glace. Dans l'exemple, les balais d'essuie-glace se déplacent parallèlement l'un à l'autre mais le concept de l'invention s'applique à toute autre forme de déplacement, par exemple antagoniste. De même, le mécanisme représenté comporte deux axes de supports, mais il va de soi que l'invention s'applique également à un mécanisme comportant un seul axe. Les axes 60 passent au travers d'ouvertures 62 prévues dans la platine 26. Ainsi, le mécanisme 48 peut être entièrement pré-assemblé sur la platine.

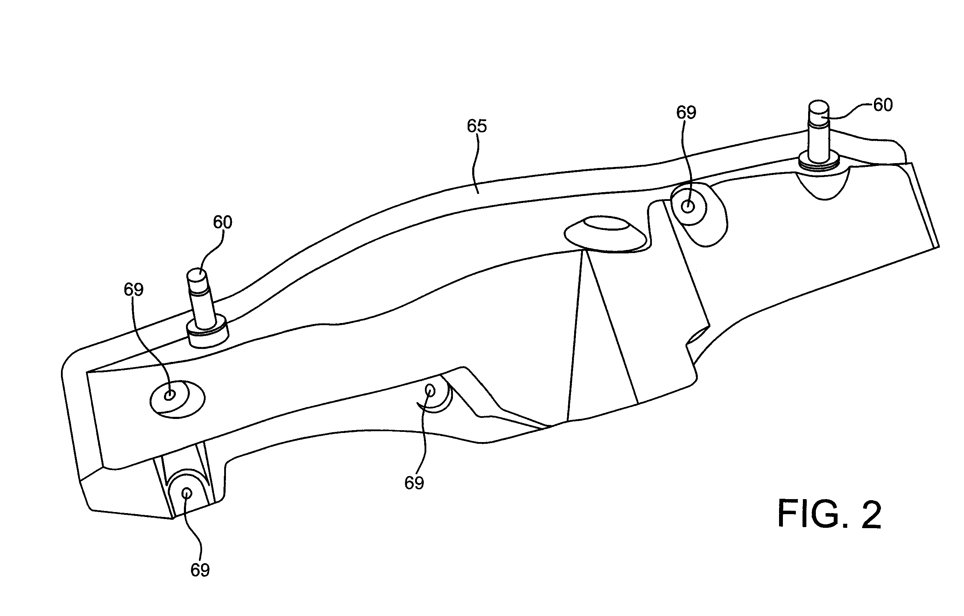

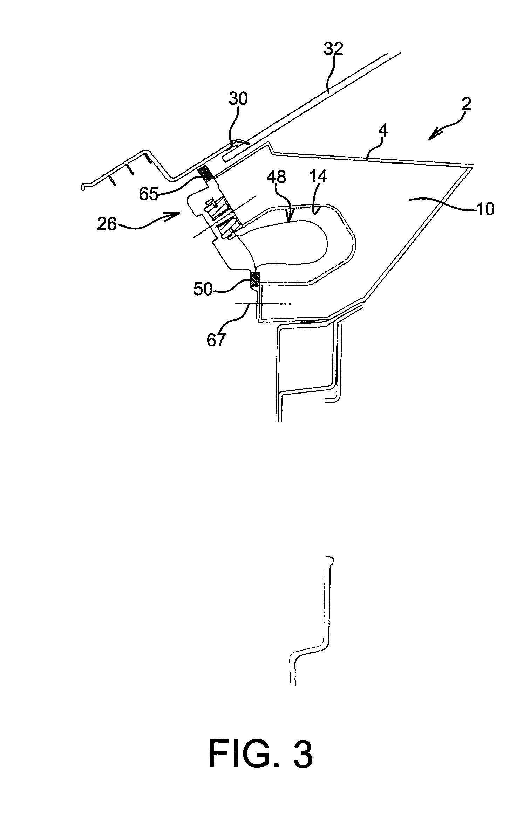

La platine comporte un rebord périphérique 65 qui s'adapte au pourtour d'une ouverture prévue dans une traverse 2 sur laquelle la platine est montée (figure 3). Cette traverse 2, appelée traverse sous baie, est un élément structurel assurant un rigidité transversale au véhicule, du fait de ses fixations aux montants latéraux. La traverse sous baie 2 permet également de supporter le pare-brise 32. Un joint d'étanchéité 50 est interposé entre la platine 26 et le rebord de l'ouverture de la traverse 2 de manière à assurer une jonction étanche. La traverse comporte des nervures de renfort, comme les nervures 10 pourvues de dégagements 14 qui ménagent un espace libre permettant de recevoir le mécanisme 48 de support et d'entraînement des balais d'essuie-glaces. La platine 26 est montée sur la traverse 2 par tout moyen approprié par exemple par des vis et des boulons schématisés par le trait tireté 67 (figure 3). Ces vis traversent des trous 69 prévus dans la paroi de la platine (figure 2) la platine 26 permet ainsi de rendre étanche la traverse et améliore les caractéristiques vibratoires et acoustiques de cette traverse. La platine renforce également la résistance au choc de la traverse 2.

Les trous de fixation 69 par lesquels la platine est mise en position contre la traverse peuvent également être utilisés pour la maintenir provisoirement en position pendant une étape de collage.

Avantageusement, la platine 26 présente une forme légèrement inclinée du haut vers le bas vers la traverse 2 pour des raisons d'architecture, en particulier la place nécessaire pour le bloc moteur.

La platine 26 peut être obtenue par moulage d'un matériau plastique de préférence un matériau composite, ou être formé d'acier ou d'aluminium par exemple. Le matériau choisi peut être identique ou non au matériau constituant la traverse 2. A titre d'exemple non limitatif, la platine 26 peut être réalisée en un matériau plastique thermodurcissable ou en une matière plastique thermoplastique. A titre d'exemple particulier, un matériau envisagé pour cette pièce est l'AMC (résine thermo durcissable à base de polyester renforcée de fibres de verre). Un autre matériau particulier envisagé pour cette pièce est le PA 66 GF30 (résine thermoplastique à base polyamide renforcée de 30% de fibre de verre). La platine peut avantageusement être réalisée par moulage par injection.

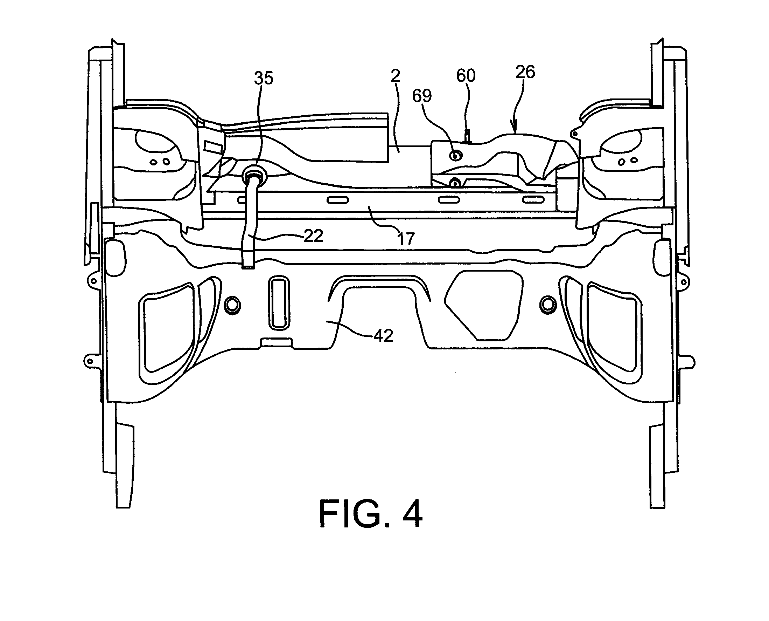

Comme on peut le constater sur les figures 3 et 4, la traverse 2 repose sur une traverse supérieure de tablier 17, qui peut être à titre d'exemple, fixée sur le tablier 42. Avantageusement, la platine 26 est disposée à une extrémité de la traverse 2, ce qui libère un espace de l'autre côté de la traverse pour un autre élément, par exemple une boîte à eau intégrée 35 comportant un tube d'évacuation d'eau 22 raccordé au tablier 42 (figure 4). A titre de variante non représentée, la boîte à eau peut s'étendre vers le côté où se situe la platine. La forme extérieure de la platine 26 peut être alors modifiée pour qu'un agencement correct soit réalisé entre la boîte à eau et la platine.

## Revendications

1. Platine de support d'essuie vitre de véhicule automobile, **caractérisée en ce qu'**elle comporte une zone de fixation pour la fixation d'un mécanisme (48) de support et d'entraînement des balais d'essuie vitre et une zone d'assemblage (65) pour fixer la platine sur un élément structurel du véhicule.

2. Platine selon la revendication 1, **caractérisée en ce que** la zone d'assemblage est une zone périphérique (65) apte à obturer une ouverture prévue dans l'élément structurel du véhicule.

3. Platine selon la revendication 1 ou 2, **caractérisée en ce qu'**elle comporte au moins un trou de passage (62) pour le passage d'au moins un axe (60) de support et d'entraînement d'un balai d'essuie vitre.

4. Platine selon l'une des revendication 1 à 3, **caractérisée en ce qu'**elle comporte une forme inclinée du haut vers le bas en direction de l'élément structurel.

5. Platine selon l'une des revendications 1 à 4, **caractérisée en ce que** l'élément structurel est une traverse creuse (2).

6. Procédé de montage d'un mécanisme de support et d'entraînement des balais d'essuie vitre sur un élément structurel d'un véhicule automobile, **caractérisé en ce que** :
- on préassemble le mécanisme (48) de support et d'entraînement des balais d'essuie vitre sur une platine (26) conforme à l'une des revendications 1 à 5, de manière à constituer un sous-ensemble,
- on monte ce sous-ensemble sur un élément structurel (2) du véhicule.
